# EUROPEAN PATENT SPECIFICATION

(11) **EP 3 150 684 B1**
(45) Date of publication and mention of the grant of the patent: **27.02.2019**
(21) Application number: 15798756.1
(22) Date of filing: 21.05.2015
(51) Int. Cl.: C09K 3/18, C04B 41/48, C04B 41/63, C08F 220/22, C08F 220/28, C04B 24/26, C04B 41/00, C08F 220/24, C04B 103/60, C04B 103/65, C04B 111/20, C04B 111/27, C04B 103/00

(54) **MASONRY TREATMENT COMPOSITION**
MAUERWERKBEHANDLUNGSZUSAMMENSETZUNG
COMPOSOTION POUR LE TRAITEMENT DE MAÇONNERIES

(30) Priority: 28.05.2014 JP 2014109973
(43) Date of publication of application: 05.04.2017
(73) Proprietor: Daikin Industries, Ltd., Osaka-shi, Osaka 530-8323 (JP)
(72) Inventor: TAKAHASHI, Kanako, Osaka-shi, Osaka 530-8323 (JP); FUKUMORI, Masaki, Osaka-shi, Osaka 530-8323 (JP); YAMAMOTO, Ikuo, Osaka-shi, Osaka 530-8323 (JP)
(74) Representative: Hoffmann Eitle
(86) International application number: PCT/JP2015/064587
(87) International publication number: WO 2015/182475

(56) References cited:
- WO-A1-2009/084530
- WO-A1-2009/084530
- WO-A1-2011/027877
- JP-A- H11 507 687
- JP-A- 2001 049 166
- JP-A- 2010 090 286
- JP-A- 2010 222 382
- JP-A- 2010 222 382

## Description

### TECHNICAL FIELD

The present invention relates to a fluorine-containing composition for masonry treatment. Particularly the present invention relates to an anionic fluorine-containing treatment composition which gives the excellent water- and oil-repellency and soil resistance (contamination resistance) to a porous substrate (masonry substrate) which has micropores, such as stone, tile and concrete.

### BACKGROUND ART

Hitherto, a cationic treatment agent comprising an amino group-containing copolymerizable monomer is known as a masonry treatment composition (for example, WO 2009/075387 (JP2011/506621 A)). JP2010-90286 A discloses an anionic treatment agent containing a silicon-containing unsaturated compound and carboxylic acid group.

On the other hand, WO2011/027877 (JP2013-503267 A) discloses a treatment agent for paper which comprises a copolymer comprising a carboxylic acid group-containing monomer. However, the use for treatment of masonry is not disclosed at all. In the treatment of paper, oil repellency is important and high water repellency is not required. WO2011/027877 does not describe a means for imparting the high water repellency required for masonry treatment.

The cationic treatment agent comprising an amino group-containing copolymerizable monomer had the problem that stability (storage stability) is poor, in case of a mixture with an additive for enhancing adhesion or permeability with a substrate. In addition, since cement was strongly alkaline, the cationic treatment agent gives the problems that the whitening of concrete occurs when the cationic treatment agent is applied to the concrete so that the cationic treatment agent cannot be used.

On the other hand, the conventional anionic treatment agents do not have satisfactory water- and oil-repellency given to various masonries.

Document WO2009/084530 and JP2010222382 describe similar masonry treatment compositions.

The masonry treatment agent is needed, which has both of the high storage stability of the treatment agent and the sufficient water- and oil-repellency.

### PRIOR ARTS DOCUMENTS

### PATENT DOCUMENTS

Patent Document 1: WO2009/075387 (JP 2011/506621 A)
Patent Document 2: JP2010-90286 A
Patent Document 3: WO2011/027877 (JP2013-503267 A)

### SUMMARY OF INVENTION

### PROBLEMS TO BE SOLVED BY THE INVENTION

An object of the present invention is to provide an anionic treatment agent which gives both of high storage stability and high water- and oil-repellency to masonry.

### MEANS FOR SOLVING THE PROBLEMS

The present invention provides a masonry treatment composition comprising a fluorine-containing polymer comprising repeating units derived from:
(a) a fluorine-containing monomer having a fluoroalkyl group represented by the general formula:

   CH₂=C(-X)-C(=O)-Y-Z-Rf

   wherein X is a hydrogen atom, a linear or branched C₁-C₂₁ alkyl group, a fluorine atom, a chlorine atom, a bromine atom, an iodine atom, a CFX¹X² group wherein X¹ and X² are a hydrogen atom, a fluorine atom, a chlorine atom, a bromine atom or an iodine atom, a cyano group, a linear or branched C₁-C₂₁ fluoroalkyl group, a substituted or non-substituted benzyl group, or a substituted or non-substituted phenyl group;
   Y is -O- or -NH-;
   Z is a C₁-C₁₀ aliphatic group, a C₆-C₁₀ aromatic or cycloaliphatic group, a -CH₂CH₂N(R¹)SO₂- group wherein R¹ is a C₁-C₄ alkyl group, a -CH₂CH(OZ¹) CH₂- group wherein Z¹ is a hydrogen atom or an acetyl group, or a -(CH₂)ₘ-SO₂-(CH₂)ₙ- group or a -(CH₂)ₘ-S-(CH₂)ₙ- group wherein m is 1 to 10 and n is 0 to 10, and
   Rf is a C₁-C₆ linear or branched perfluoroalkyl group,
(b) a first hydrophilic monomer represented by the general formula:

   CH₂=CX¹¹C(=O)-O-RO-X¹²

   wherein X¹¹ is a hydrogen atom or a methyl group,
   X¹² is a hydrogen atom or a saturated or unsaturated C₁-C₂₂ hydrocarbon group, and
   R is a C₂-C₆ alkylene group,
(c) a second hydrophilic monomer represented by the general formula:

   CH₂=CX²¹C(=O )-O-(RO)ₙ-X²²

   or

   CH₂=CX³¹C(=O)-O-(RO)ₙ-C(=O)CX³²=CH₂

   wherein each of X²¹, X²² and X³² is independently a hydrogen atom or a methyl group,
   X²² is a hydrogen atom or a saturated or unsaturated C₁-C₂₂ hydrocarbon group,
   R is a C₂-C₆ alkylene group, and
   n is an integer of 2 to 90, and
(d) a monomer having an anion-donating group and an ethylenically unsaturated double bond, which is (meth)acrylic acid. The polymer contains based on 100 wt.-% of the total of monomers (a)-(d), 45-76 wt.-% of monomer (a), 5-25 wt.-% of monomer (b), 3-30 wt.-% of monomer (c) and 6-25 wt.-% of monomer (d). The polymer has a weight-average molecular weight of 30,000 to 110,000, as measured by GPC in terms of polystyrene.

The present invention also provides a method of treating masonry with the above-mentioned masonry treatment composition, and masonry treated with the above-mentioned masonry treatment composition.

### EFFECT OF THE INVENTION

In the present invention, the fluorine-containing polymer enhances the storage stability at the time of a combination with an anionic additive by using the anion-donating group-containing monomer. The dispersibility in water of the fluorine-containing polymer is improved and the permeability into the masonry of the treatment agent is good. The treatment agent of the present invention gives high soil resistance (high resistance to contamination) to masonry in addition to high water- and oil-repellency.

### MODES FOR CARRYING OUT THE INVENTION

In the present invention, the ingredients of the fluorine-containing copolymer have a great influence on the properties of the masonry treatment composition.

The masonry treatment agent of the present invention has the repeating units derived from the fluorine-containing monomer (a), the first hydrophilic monomer (b), the second hydrophilic monomer (c), and the anion-donating group-containing monomer (d).

The fluorine-containing monomer (a) is at least one compound represented by the general formula:

CH₂=C(-X)-C(=O)-Y-Z-Rf

wherein X is a hydrogen atom, a linear or branched C₁-C₂₁ alkyl group, a fluorine atom, a chlorine atom, a bromine atom, an iodine atom, a CFX¹X² group (wherein X¹ and X² are a hydrogen atom, a fluorine atom, a chlorine atom, a bromine atom or an iodine atom), a cyano group, a linear or branched C₁-C₂₁ fluoroalkyl group, a substituted or non-substituted benzyl group, or a substituted or non-substituted phenyl group;
Y is -O- or -NH-;
Z is a C₁-C₁₀ aliphatic group, a C₆-C₁₀ aromatic or cycloaliphatic group, a -CH₂CH₂N(R¹)SO₂- group wherein R¹ is a C₁-C₄ alkyl group, a -CH₂CH(OZ¹)CH₂- group wherein Z¹ is a hydrogen atom or an acetyl group, or a -(CH₂)ₘ-SO₂-(CH₂)ₙ- group or a -(CH₂)ₘ-S-(CH₂)ₙ- group wherein m is 1 to 10 and n is 0 to 10, and
Rf is a C₁-C₆ linear or branched perfluoroalkyl group.

Preferably, the fluorine-containing monomer (a) is an acrylate wherein Y is -O-.

The fluorine-containing monomer (a) may be substituted by, for example, a halogen atom at α-position of acrylate or methacrylate. Therefore, X may be a linear or branched C₂-C₂₁ alkyl group, a fluorine atom, a chlorine atom, a bromine atom, an iodine atom, a CFX¹X² group (wherein X¹ and X² are a hydrogen atom, a fluorine atom, a chlorine atom, a bromine atom or an iodine atom), a cyano group, a linear or branched C₁-C₂₁ fluoroalkyl group, a substituted or non-substituted benzyl group, or a substituted or non-substituted phenyl group.

Preferably, X is a linear or branched C₁-C₂₁ alkyl group or a chlorine atom, more preferably a methyl group or a chlorine atom. Particularly preferably, X is a methyl group in view of high water repellency.

The Rf group is a perfluoroalkyl group. The carbon number of the Rf group may be 1 to 6, particularly 4 to 6, especially 6. Examples of the Rf group include -CF₃, -CF₂CF₃, -CF₂CF₂CF₃, -CF(CF₃)₂, -CF₂CF₂CF₂CF₃,-CF₂CF(CF₃)₂, -C(CF₃)₃, -(CF₂)₄ CF₃, -(CF₂)₂CF(CF₃)₂, -CF₂C(CF₃)₃,-CF(CF₃)CF₂CF₂CF₃, -(CF₂)₅CF₃ and -(CF₂)₃CF(CF₃)₂. Especially, -(CF₂)₅CF₃ is preferable.

Preferably, the Rf group is a perfluoroalkyl group having 4 to 6, for example, 6 carbon atoms, since good water- and oil-repellency and soil resistance are obtained.

Examples of the fluorine-containing monomer (a) include the followings:
Rf-(CH₂)₁₀OCOCH=CH₂
Rf-(CH₂)₁₀OCOC(CH₃)=CH₂
Rf-CH₂OCOCH=CH₂
Rf-CH₂OCOC(CH₃)=CH₂
Rf-(CH₂)₂₀COCH=CH₂
Rf-(CH₂)₂OCOC(CH₃)=CH₂
Rf-SO₂N(CH₃)(CH₂)₂OCOCH=CH₂
Rf-SO₂N(C₂H₅)(CH₂)₂0COCH=CH₂
Rf-CH₂CH(OCOCH₃)CH₂OCOC(CH₃)=CH₂
Rf-CH₂CH(OH)CH₂OCOCH=CH₂

Other examples of the fluorine-containing monomer (a), which do not limit the fluorine-containing monomer (a), include the followings:
CH₂=C(-H)-C(=O)-O-C₆H₄-Rf
CH₂=C(-Cl)-C(=O)-O-(CH₂)₂-Rf
CH₂=C(-H)-C(=O)-O-(CH₂)₂N(-CH₃)SO₂-Rf
CH₂=C(-H)-C(=O)-O-(CH₂)₂N(-C₂H₅) SO₂-Rf
CH₂=C(-H)-C(=O)-O-CH₂CH(-OH) CH₂-Rf
CH₂=C(-H)-C(=O)-O-CH₂CH(-OCOCH₃) CH₂-Rf
CH₂=C(-H)-C(=O)-O-(CH₂)₂-S-Rf
CH₂=C(-H)-C(=O)-O-(CH₂)₂-S-(CH₂)₂-Rf
CH₂=C(-H)-C(=O)-O-(CH₂)₃-SO₂-Rf
CH₂=C(-H)-C(=O)-O-(CH₂)₂-SO₂-(CH₂)₂-Rf
CH₂=C(-H)-C(=O)-NH-(CH₂)₂-Rf
CH₂=C(-CH₃)-C(=O)-O-(CH₂)₂-S-Rf
CH₂=C(-CH₃)-C(=O)-O-(CH₂)₂-S-(CH₂)₂-Rf
CH₂=C(-CH₃)-C(=O)-O-(CH₂)₃-SO₂-Rf
CH₂=C(-CH₃)-C(=O)-O-(CH₂)₂-SO₂-(CH₂)₂-Rf
CH₂=C(-CH₃)-C(=O)-NH-(CH₂)₂-Rf
CH₂=C(-F)-C(=O)-O-(CH₂)₂-S-Rf
CH₂=C(-F)-C(=O)-O-(CH₂)₂-S-(CH₂)₂-Rf
CH₂=C(-F)-C(=O)-O-(CH₂)₂-SO₂-Rf
CH₂=C(-F)-C(=O)-O-(CH₂)₂-SO₂-(CH₂)₂-Rf
CH₂=C(-F)-C(=O)-NH-(CH₂)₂-Rf
CH₂=C(-Cl)-C(=O)-O-(CH₂)₂-S-Rf
CH₂=C(-Cl)-C(=O)-O-(CH₂)₂-S-(CH₂)₂-Rf
CH₂=C(-Cl)-C(=O)-O-(CH₂)₂-SO₂-Rf
CH₂=C(-Cl)-C(=O)-O-(CH₂)₂-SO₂-(CH₂)₂-Rf
CH₂=C(-Cl)-C(=O)-NH-(CH₂)₂-Rf
CH₂=C(-CF₃)-C(=O)-O-(CH₂)₂-S-Rf
CH₂=C(-CF₃)-C(=O)-O-(CH₂)₂-S-(CH₂)₂-Rf
CH₂=C(-CF₃)-C(=O)-O-(CH₂)₂-SO₂-Rf
CH₂=C(-CF₃)-C(=O)-O-(CH₂)₂-SO₂-(CH₂)₂-Rf
CH₂=C(-CF₃)-C(=O)-NH-(CH₂)₂-Rf
CH₂=C(-CF₂H)-C(=O)-O-(CH₂)₂-S-Rf
CH₂=C(-CF₂H)-C(=O)-O-(CH₂)₂-S-(CH₂)₂-Rf
CH₂=C(-CF₂H)-C(=O)-O-(CH₂)₂-SO₂-Rf
CH₂=C(-CF₂H)-C(=O)-O-(CH₂)₂-SO₂-(CH₂)₂-Rf
CH₂=C(-CF₂H)-C(=O)-NH-(CH₂)₂-Rf
CH₂=C(-CN)-C(=O)-O-(CH₂)₂-S-Rf
CH₂=C(-CN)-C(=O)-O-(CH₂)₂-S-(CH₂)₂-Rf
CH₂=C(-CN)-C(=O)-O-(CH₂)₂-SO₂-Rf
CH₂=C(-CN)-C(=O)-O-(CH₂)₂-SO₂-(CH₂)₂-Rf
CH₂=C(-CN)-C(=O)-NH-(CH₂)₂-Rf
CH₂=C(-C F₂CF₃)-C(=O)-O-(CH₂)₂-S-Rf
CH₂=C(-CF₂CF₃)-C(=O)-O-(CH₂)₂-S-(CH₂)₂-Rf
CH₂=C(-CF₂CF₃)-C(=O)-O-(CH₂)₂-SO₂-Rf
CH₂=C(-CF₂CF₃)-C(=O)-O-(CH₂)₂-SO₂-(CH₂)₂-Rf
CH₂=C(-CF₂CF₃)-C(=O)-NH-(CH₂)₂-Rf
CH₂=C(-F)-C(=O)-O-(CH₂)₃-S-Rf
CH₂=C(-F)-C(=O)-O-(CH₂)₃-S-(CH₂)₂-Rf
CH₂=C(-F)-C(=O)-O-(CH₂)₃-SO₂-Rf
CH₂=C(-F)-C(=O)-O-(CH₂)₃-SO₂-(CH₂)₂-Rf
CH₂=C(-F)-C(=O)-NH-(CH₂)₃-Rf
CH₂=C(-Cl)-C(=O)-O-(CH₂)₃-S-Rf
CH₂=C(-Cl)-C(=O)-O-(CH₂)₃-S-(CH₂)₂-Rf
CH₂=C(-Cl)-C(=O)-O-(CH₂)₃-SO₂-Rf
CH₂=C(-Cl)-C(=O)-O-(CH₂)₃-SO₂-(CH₂)₂-Rf
CH₂=C(-CF₃)-C(=O)-O-(CH₂)₃-S-Rf
CH₂=C(-CF₃)-C(=O)-O-(CH₂)₃-S-(CH₂)₂-Rf
CH₂=C(-CF₃)-C(=O)-O-(CH₂)₃-SO₂-Rf
CH₂=C(-CF₃)-C(=O)-O-(CH₂)₃-SO₂-(CH₂)₂-Rf
CH₂=C(-CF₂H)-C(=O)-O-(CH₂)₃-S-Rf
CH₂=C(-CF₂H)-C(=O)-O-(CH₂)₃-S-(CH₂)₂-Rf
CH₂=C(-CF₂H)-C(=O)-O-(CH₂)₃-SO₂-Rf
CH₂=C(-CF₂H)-C(=O)-O-(CH₂)₃-SO₂-(CH₂)₂-Rf
CH₂=C(-CN)-C(=O)-O-(CH₂)₃-S-Rf
CH₂=C(-CN)-C(=O)-O-(CH₂)₃-S-(CH₂)₂-Rf
CH₂=C(-CN)-C(=O)-O-(CH₂)₃-SO₂-Rf
CH₂=C(-CN)-C(=O)-O-(CH₂)₃-SO₂-(CH₂)₂-Rf
CH₂=C(-CF₂CF₃)-C(=O)-O-(CH₂)₃-S-Rf
CH₂=C(-CF₂CF₃)-C(=O)-O-(CH₂)₃-S-(CH₂)₂-Rf
CH₂=C(-CF₂CF₃)-C(=O)-O-(CH₂)₃-SO₂-Rf
CH₂=C(-CF₂CF₃)-C(=O)-O-(CH₂)₂-SO₂-(CH₂)₂-Rf
wherein Rf is a C₁-C₆ fluoroalkyl group, preferably a C₄-C₆ fluoroalkyl group.

The first hydrophilic monomer (b) is at least one compound represented by the general formula:

CH₂=CX¹¹C(=O)-O-RO-X¹²

wherein X¹¹ is a hydrogen atom or a methyl group,
X¹² is a hydrogen atom or a saturated or unsaturated C₁-C₂₂ hydrocarbon group, and
R is a C₂-C₆ alkylene group.

The first hydrophilic monomer (b) is a mono-oxyalkylene (meth)acrylate. Preferably, the number of carbon atoms in the oxyalkylene group is 2 to 4, particularly 2, in view of water solubility.

Specific examples of the first hydrophilic monomer (b) include:
CH₂=CH-C(=O)-O-CH₂CH₂OH, CH₂=C(CH₃)-C(=O)-O-CH₂CH₂OH
CH₂=CH-C(=O)-O-CH₂CH₂OCH₃, and CH₂=C(CH₃)-C(=O)-O-CH₂CH₂OCH₃.

The second hydrophilic monomer (c) is at least one compound represented by the general formula:

CH₂=CX²¹C(=O)-O-(RO)ₙ-X²²

or

CH₂=CX³¹C(=O)-O-(RO)ₙ-C(=O)CX³²=CH₂

wherein each of X²¹, X²² and X³² is independently a hydrogen atom or a methyl group,
X²² is a hydrogen atom or a saturated or unsaturated C₁-C₂₂ hydrocarbon group,
R is a C₂-C₆ alkylene group, and
n is an integer of 2 to 90.

The second hydrophilic monomer (c) is a polyoxyalkylene (meth)acrylate. The second hydrophilic monomer (c) may be ω-hydroxy-polyoxyalkylene (meth)acrylate. Preferably, the number of carbon atoms in the oxyalkylene group is 2 to 4, particularly 2, in view of water solubility. An average degree of polymerization of the oxyalkylene group in a polyoxyalkylene group may be 2 to 10, preferably 2 to 5.

Specific examples of the second hydrophilic monomer (c) include:
CH₂=CH-C(=O)-O-(CH₂CH₂O)₂H,
CH₂=CH-C(=O)-O-(CH₂CH₂O)₃H,
CH₂=CH-C(=O)-O-(CH₂CH₂O)₁₁ H,
CH₂=CH-C(=O)-O-(CH₂CH₂O)₁₂H,
CH₂=C(CH₃)-C(=O)-O-(CH₂CH₂O)₂H,
CH₂=C(CH₃)-C(=O)-O-(CH₂CH₂O)₃H,
CH₂=C(CH₃)-C(=O)-O-(CH₂CH₂O)₁₁H,
CH₂=C(CH₃)-C(=O)-O-(CH₂CH₂O)₁₂H,
CH₂=CH-C(=O)-O-(CH₂)₂-OCH₃,
CH₂=CH-C(=O)-O-(CH₂)₂-OCH₂CH₃,
CH₂=C(CH₃)-C(=O)-O-(CH₂)₂-OCH₃,
CH₂=C(CH₃)-C(=O)-O-(CH₂)₂-OCH₂CH₃,
CH₂=CH-C(=O)-O-(CH₂CH₂O)₂C(=O)-CH=CH₂, and
CH₂=C(CH₃)-C(=O)-O-(CH₂CH₂O)₂C(=O)-CH=CH₂.

Both of high water solubility and high water repellency can be obtained by using a combination of the first hydrophilic monomer (b) and the second hydrophilic monomer (c). Preferably, a weight ratio of the first hydrophilic monomer (b) and the second hydrophilic monomer (c) is 9:1 to 1:9, particularly 8:2 to 5:5.

The anion-donating group-containing monomer (d) is a compound having an anion-donating group and an ethylenically unsaturated double bond (a carbon-carbon double bond). The anion-donating group is a carboxyl group. The monomer (d) is (meth)acrylic acid. The monomer (d) is (meth)acrylic acid, in view of copolymerizability. (Meth)acrylic acid enhances the water solubility of the fluorine-containing polymer, and gives high storage stability of the treatment agent and high permeability into the substrate.

Each of the monomers (a) to (d) may be alone or a combination of at least two. Although the monomers constituting the fluorine-containing polymer may comprise an amino group-containing monomer, it is preferable that the monomers do not comprise the amino group-containing monomer.

In the fluorine-containing polymer, the amount of a monomer (a) is 45 to 76% by weight, the amount of the monomer (b) is 5 to 25% by weight, the amount of the monomer (c) is 3 to 30% by weight, and the amount of the monomer (d) is 6 to 25% by weight, based on 100% by weight of the total of the monomers (a) to (d). These amounts are chosen in view of high water- and oil-repellency and high water solubility. More preferably, the amount of the monomer (d) is 7 to 15% by weight.

In the present invention, the molecular weight of the fluorine-containing polymer, in addition to the ingredients of the fluorine-containing polymer, has a large influence on the water- and oil-repellency. The weight-average molecular weight of the fluorine-containing polymer in the present invention is 30,000 or more in view of high water- and oil-repellency, and is 110,000 or less in a view of permeability into micropores. More preferably, the weight-average molecular weight is 40,000 to 110,000. The weight-average molecular weight of the fluorine-containing polymer is determined by GPC (gel permeation chromatography) (in terms of polystyrene).

The fluorine-containing polymer may consist of the monomers (a) to (d), or may contain another monomer in addition to the monomers (a) to (d).

The fluorine-containing polymer may comprise, in addition to the monomers (a) to (d), repeating units derived from a silicon-containing monomer, but may not comprise the same. The use of the silicon-containing monomer can improve the permeability into and adhesion to the masonry substrate.

The silicon-containing monomer is a monomer having at least one silicon atom and one ethylenically unsaturated double bond (carbon-carbon double bond).

The silicon-containing monomer may be monomer represented by, for example, the formula: 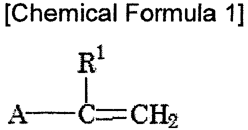
wherein A is a monovalent group having at least one silicon atom, and
R¹ is a hydrogen atom or a methyl group.

The A group may be represented by the formula:

Rₛi-X-

wherein Rₛᵢ is R¹¹-(Si(R¹²)₂)_{P}- or R¹¹-(Si(R¹²)₂-O)ₚ-
where R¹¹ is a hydrogen atom or C₁-C₈ alkyl group or a C₆ - C₈ aryl group,
each of R¹² is, the same or different, a hydrogen atom, or a C₁-C₈ hydrocarbon group or halogenated hydrocarbon group which may have a functional group, and
p is the number of 1 to 100, and
X is a direct bond, -(CH₂)_{q}- where q is a number of 1 to 20, -(CH₂)ᵣO-where r is a number of 0 to 20, or -(CH₂)ₛ-OC(=O)- where s is a number of 0 to 20.

The functional group in the A group includes a hydroxyl group, an epoxy group, a chloromethyl group, a blocked isocyanate, an amino group and a carboxyl group. Examples of the C₁-C₈ hydrocarbon group or C₁-C₈ halogenated hydrocarbon group which may have a functional group are as follows:

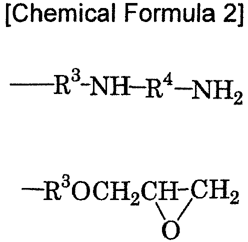

[Chemical Formula 3] -R³COOH

-R³-SH

-R³-C1

wherein R³ and R⁴ are a direct bond, or an C₁₋₂₁ aliphatic group (for example, an alkylene group), aromatic group or araliphatic group.

Specific examples of the silicon-containing monomer include vinyltrimetoxysilane, vinyltriethoxysilane,

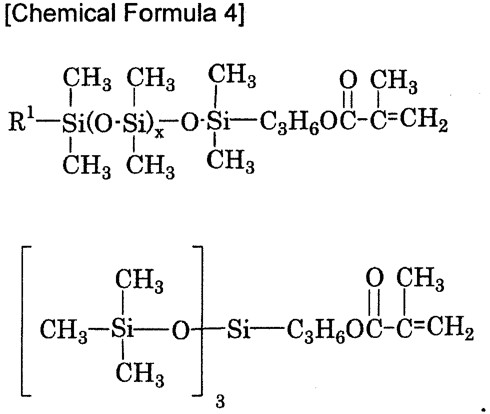

The amount of the silicon-containing monomer in the fluorine-containing polymer may be 30 % by weight or less, for example, 1 to 20 % by weight, based on the fluorine-containing polymer.

The treatment composition of the present invention comprises the fluorine-containing copolymer and an aqueous medium. The term "aqueous medium" used herein means a medium only consisting of water, and a medium comprising, in addition to water, an organic solvent (The amount of the organic solvent is 80 parts by weight or less, for example, 0.1 to 50 parts by weight, particularly 5 to 30 parts by weight, based on 100 parts by weight of water).

The fluorine-containing polymer of the present invention can be produced by any of conventional polymerization methods and the polymerization condition can be optionally selected. The polymerization method includes, for example, a solution polymerization, a suspension polymerization and an emulsion polymerization. The solution polymerization is particularly preferable.

In the solution polymerization, there can be used a method of dissolving the monomer(s) into an organic solvent in the presence of a polymerization initiator, replacing the atmosphere by nitrogen, and stirring the mixture with heating, for example, at the temperature within the range from 50°C to 120°C for 1 hour to 10 hours. Examples of the polymerization initiator include azobisisobutyronitrile, azobisisovaleronitrile, benzoyl peroxide, di-tert-butyl peroxide, lauryl peroxide, cumene hydroperoxide, t-butyl peroxypivalate and diisopropyl peroxydicarbonate. The polymerization initiator may be used in the amount within the range from 0.01 to 5 parts by weight based on 100 parts by weight of the monomers.

The organic solvent is inert to the monomer(s) and dissolves the monomer(s), and examples thereof include pentane, hexane, heptane, octane, isooctane, cyclohexane, benzene, toluene, xylene, petroleum ether, a commercial petroleum solvent (for example, EXXSOL D40 and ISOPAR E manufactured by Exxon Mobil Corporation), tetrahydrofuran, 1,4-dioxane, acetone, methyl ethyl ketone, methyl isobutyl ketone, methyl acetate, ethyl acetate, butyl acetate, t-butyl acetate, isopropanol, propylene glycol methyl ether acetate, p-chlorobenzotrifluoride, 1,1,2,2-tetrachloroethane, 1,1,1-trichloroethane, trichloroethylene, perchloroethylene, tetrachlorodifluoroethane and trichlorotrifluoroethane. The organic solvent may be used in the amount within the range from 50 to 1,000 parts by weight, based on 100 parts by weight of total of the monomers.

The aqueous solution or aqueous dispersion of the polymer can be obtained by, after a polymerization reaction, adding water added to a reaction mixture and removing (for example, distilling) the organic solvent (a solvent substitution method).

The treatment composition can be produced also by a method other than the solvent substitution method. The treatment composition may be produced by, for example, adding water after the polymerization.

The production of the treatment composition can be performed by merely polymerizing the monomers in the liquid medium or diluting with an additional liquid medium after the polymerization. The liquid medium for polymerization and the liquid medium for dilution may be the same or different medium. Examples of the liquid medium for polymerization and the liquid medium for dilution may be water alone, water-soluble or water-dispersible organic solvent alone, or a mixture of a water-soluble or water-dispersible organic solvent with water. The monomer and the liquid medium are preferably in a form of a solution wherein the monomer is dissolved in the liquid medium. The polymerization may be a solution polymerization or an emulsion polymerization, preferably a solution polymerization in view of stability of polymerization reaction.

The structural units from the monomer (d) (the anion-donating group) may be neutralized by adding a base (such as an aqueous solution of inorganic or organic base) after carrying out the polymerization; or the polymerization may be carried out by using the monomer (d) neutralized with the base in advance. When the monomers are polymerized after the monomer (d) is neutralized with the base in advance, the neutralization with a basic aqueous solution is not necessary.

Examples of the inorganic or organic bases include sodium hydroxide, potassium hydroxide, ammonia, triethylamine, tri-n-propylamine, triisopropylamine, tri-n-butylamine, tri-sec-butylamine, ethanolamine, diethanolamine, triethanolamine, 2-amino-2-methyl-1-propanol, 2-aminomethyl-1,3-propanediol, 2-amino-2-hydroxymethyl-1,3-propanediol, bis(hydroxymethyl) methylaminomethane, tris(hydroxymethyl) aminomethane, lysine and arginine. Among these bases, for example, sodium hydroxide, potassium hydroxide, ammonia, triethylamine, diethanolamine and triethanolamine are preferable in view of the improvement of the dispersibility of the obtained fluorine-containing polymer in the aqueous medium.

The polymer mixture after polymerization may be, if necessary, diluted by adding the aqueous medium (particularly, water).

Non-limiting examples of the water-soluble or water-dispersible organic solvents which are a liquid medium utilized in polymerization include ketones (for example, acetone or methyl ethyl ketone), alcohols (for example, methanol, ethanol and isopropanol), ethers (for example, methyl or ethyl ether of ethylene glycol or propylene glycol, acetate ester thereof, tetrahydrofuran and dioxane), acetonitrile, dimethylformamide, N-methyl-2-pyrollidone, butyllactone and dimethylsulfoxide. Among them, methyl ethyl ketone (MEK), N-methyl-2-pyrollidone (NMP), a mixture of N-methyl-2-pyrollidone and acetone, isopropanol or methanol is preferably used as a solvent. The total monomer concentration in the solution may be in the range of 20 to 70% by weight, preferably, 40 to 60% by weight.

The polymerization may be carried out by using at least one initiator in the amount of 0.1 to 3.0 % by weight based on the total weight of the monomers. Peroxides such as benzoyl peroxide, lauroyl peroxide, succinyl peroxide and tert-butyl perpivalate, or azo-compounds such as 2,2-azobis-isobutylonitrile, 4, 4-azobis (4-cyanopentanoic acid) and azodicarbonamide may be used as the initiator.

A chain transfer agent may be used for controlling the molecular weight of the copolymer. Examples of the chain transfer agent preferably include alkylmercaptan (such as dodecylmercaptan, laurylmercaptan and stearylmercaptan), aminoethanethiol, mercaptoethanol, thioglycollic acid and 2-mercaptopropionic acid. The amount of the chain transfer agent used may be in the range of 0.01 to 2 parts by weight, for example, 0.05 to 1 parts by weight, based on 100 parts by weight of the total monomers in the polymerization reaction.

The polymerization can be carried out in the range from 40°C to a boiling point of the reaction mixture.

The dilution step may be carried out by adding the liquid medium such as water or an aqueous solution of a strong or moderate inorganic or organic base into the solution of the fluorine-containing polymer in the organic solvent. The above-mentioned examples of the bases are the same as the above-mentioned bases. Among them, sodium hydroxide and/or ammonia are preferably used. The amount of the aqueous solution and the concentration of the base are preferable to be sufficiently enough to neutralize the carboxylic acid group or the sulfonic acid group of the monomer (d) and also to give a solid content of a final fluorine-containing polymer solution of 5 to 35 % by weight, preferably 15 to 25 % by weight.

In order to neutralize the carboxylic acid group and the sulfonic acid group, it is advantageous to use the amount of base in the range of 0.1 to 5 eq., preferably 0.5 to 3 eq., based on the monomer (d).

In the present invention, the treatment agent (such as the water- and oil-repellent agent or the soil resistant agent) comprises (1) the fluorine-containing polymer, and (2) the liquid medium, that is, water or the mixture of water and the water-soluble organic solvent. Examples of the water-soluble organic solvent include alcohols such as methanol, ethanol, n-propanol and isopropanol; and ketones such as acetone. The amount of the water-soluble organic solvent may be 50 % by weight or less, for example, 1 to 30 % by weight, based on the mixture (total of water and the water-soluble organic solvent).

Preferably, the treatment agent is in the form of a solution (for example, an aqueous solution) of the fluorine-containing polymer.

In the treatment agent, the amount of the fluorine-containing polymer is not limited, and said amount may be suitably selected from the limited range giving a homogeneous solution. The amount of the fluorine-containing polymer may be 0.1 to 50 % by weight, for example, 0.2 to 20 % by weight, particularly 0.5 to 10 % by weight, based on the treatment agent.

The treatment agent of the present invention may contain (3) an additive, in addition to (1) the fluorine-containing polymer and (2) the liquid medium.

Examples of the additive (3) include a silicon-containing compound, a wax and an acrylic emulsion.

The treatment agent may contain, in addition to above-mentioned components (1) to (3), if needed, another water repellent agent, another oil repellent agent, a rate-of-drying regulator, a cross linking agent, a film formation assistant, a compatibilizer, a surface active agent, an antifreezing agent, a viscosity controlling agent, an ultraviolet ray absorbent, an antioxidant, a pH adjuster, a defoaming agent, an aesthetic property regulator, a slide regulator, an antistatic agent, a hydrophilization agent, antibacterial medicine, antiseptics, an insecticide, an aromatic agent and a flame retardant.

In the present invention, the treatment agent is applied to the substrate to give the water- and oil-repellency and the soil resistance to the substrate.

The substrate is masonry such as a stone. Examples of the masonry include a stone, a brick, a concrete and a tile. Examples of the stone include a natural stone (for example, marble and granite) and an artificial stone.

The masonry is treated by applying (coating) the treatment agent to the substrate. The amount of the treatment agent may be such that the fluorine-containing polymer contained in the treatment agent is 0.05 to 50 g/m², for example, 0.1 to 20 g/m², preferably 1 to 10 g/m². The coating may be conducted once or a plurality of times. The coating method may be any of, for example, brushing, spraying, rolling, dipping and use of a waste cloth containing the treatment agent. The excess of the treatment agent may be wiped off according to the necessity. Then the treatment agent is dried to remove the liquid medium. The drying may be conducted at room temperature (20°C), and/or the baking may be conducted at 80°C to 250°C.

The "treatment" means that a treatment agent is applied to a substrate by, for example, dipping, spraying or coating. The treatment gives the result that the fluorine-containing polymer which is an active component of the treatment agent is adhered to surfaces of the substrate and/or penetrated into internal parts of the substrate.

### Examples

The present invention is specifically illustrated by showing Examples and Comparative Examples which are merely specific examples of the present invention and which do not limit the present invention. Hereinafter, the terms "parts" and "%" mean "parts by weight (or pbw)" and "% by weight (or wt%)", respectively, if not specified.

The testing methods used herein are as follows:

### Weight-average molecular weight:

A weight-average molecular weight of the fluorine-containing copolymer is determined by GPC (gel permeation chromatography) (in terms of polystyrene).

### Dispersion stability:

Dispersion stability of the fluorine-containing copolymer was observed. An aqueous dispersion having a solid concentration of 20% by weight was prepared and put into a glass sample bottle, the bottle was stood at room temperature for seven days and then the existence of sedimentation or aggregation was visually observed. The evaluation criterion was as follows:
Good: No sedimentation and aggregation,
Fair: Slight sedimentation and aggregation, and
Bad: Much sedimentation and aggregation.

### Soil resistance test (water repellency):

An aqueous soil (for example, red wine and coffee) was dropped on the treated substrate, the drop was allowed to stand for 24 hours, and the soil was removed by lightly water-wiping with a paper towel. Visual evaluation was performed in accordance with the following criterion.
0: Deep stain, large spread of stain
1: Deep stain, slight or no spread of stain
2: Moderate stain, no spread of stain
3: Slight stain
4: No stain

### Soil resistance test (oil repellency):

An oily soil (for example, olive oil and red chili pepper oil) was put on the treated substrate, the drop was allowed to stand for 24 hours, and the soil was removed by lightly water-wiping with a paper towel. Visual evaluation was performed in accordance with the following criterion.
0: Deep stain, large spread of stain
1: Deep stain, slight or no spread of stain
2: Moderate stain, no spread of stain
3: Slight stain
4: No stain

### Synthesis Example 1

53.70g of CF₃CF₂-(CF₂CF₂)₂-CH₂CH₂OCOC(CH₃)=CH₂ (C6SFMA), 17.90 g of hydroxyethyl methacrylate (HEMA), 8.95 g of ω-hydroxy-potyoxyethytene acrylate (HPOEA) (average polymerization degree of polyoxyethylene group ≒ 6), 8.95 g of methacrylic acid and 395.70 g of the methyl ethyl ketone were stirred and dissolved in a four-necked flask, and kept at 64°C with purging with a nitrogen gas. 1.13 g of t-butyl peroxypivalate was added to react at 64°C for 8 hours to give a solution of a polymer. A conversion of the monomers determined with a gas chromatography was 90% or more. A weight-average molecular weight of the produced polymer was 80,000.

### Synthesis Example 2

The same procedure as in Synthesis Example 1 was repeated except changing the amount of CF₃CF₂-(CF₂CF₂)₂-CH₂CH₂OCOC(CH₃)=CH₂ (C6SFMA) into 52.81 g and the amount of methacrylic acid into 9.85 g. A conversion of the monomers determined with a gas chromatography was 90% or more.

### Synthesis Example 3

The same procedure as in Synthesis Example 1 was repeated except changing the amount of CF₃CF₂-(CF₂CF₂)₂-CH₂CH₂OCOC(CH₃)=CH₂ (C6SFMA) into 54.60 g and the amount of methacrylic acid into 8.06 g. A conversion of the monomers determined with a gas chromatography was 90% or more.

### Synthesis Example 4

The same procedure as in Synthesis Example 1 was repeated except adding 1.79 g of lauryl mercaptan (L-SH) as a chain transfer agent. A conversion of the monomers determined with a gas chromatography was 90% or more.

### Synthesis Example 5

The same procedure as in Synthesis Example 1 was repeated except adding 2.69 g of lauryl mercaptan (L-SH) as a chain transfer agent. A conversion of the monomers determined with a gas chromatography was 90% or more.

### Synthesis Example 6

The same procedure as in Synthesis Example 1 was repeated except that 54.60 g of CF₃CF₂-(CF₂CF₂)₂-CH₂CH₂OCOCH=CH₂ (C6SFA) was used instead of C6SFMA and the amount of methacrylic acid was changed into 8.06 g. A conversion of the monomers determined with a gas chromatography was 90% or more.

### Synthesis Example 7

The same procedure as in Synthesis Example 1 was repeated except that the amount of methacrylic acid was changed into 4.48 g and 4.48 g of itaconic acid was added. A conversion of the monomers determined with a gas chromatography was 90% or more.

### Comparative Synthesis Example 1

The same procedure as in Synthesis Example 1 was repeated except changing the amount of CF₃CF₂-(CF₂CF₂)₂-CH₂CH₂OCOC(CH₃)=CH₂ (C6SFMA) into 62.65 g and the amount of methacrylic acid into 0 g. A conversion of the monomers determined with a gas chromatography was 90% or more.

### Comparative Synthesis Example 2

The same procedure as in Synthesis Example 1 was repeated except changing the amount of CF₃CF₂-(CF₂CF₂)₂-CH₂CH₂OCOC(CH₃)=CH₂ (C6SFMA) into 71.60 g and the amount of hydroxyethyl methacrylate (HEMA) into 0 g. A conversion of the monomers determined with a gas chromatography was 90% or more.

### Comparative Synthesis Example 3

The same procedure as in Synthesis Example 1 was repeated except changing the amount of CF₃CF₂-(CF₂CF₂)₂-CH₂CH₂OCOC(CH₃)=CH₂ (C6SFMA) into 62.65 g and the amount of ω-hydroxy-polyoxyethytene acrylate (HPOEA) into 0 g. A conversion of the monomers determined with a gas chromatography was 90% or more.

The ingredients and the weight-average molecular weights of the polymers which were obtained by Synthesis Examples and Comparative Synthesis Examples are shown in Table 1.

### Preparation Example 1

A transparent pale-yellow aqueous dispersion was obtained by adding 48.48 g of 1.0% of an aqueous sodium hydroxide solutions as a base to 35 g of the fluorine-containing copolymer solution obtained by Synthesis Example 1, and distilling off methyl ethyl ketone with heating under a reduced pressure with an evaporator. Ion exchanged water was further added to this aqueous dispersion to obtain an aqueous dispersion having a solid content of 20 % by weight. The results of evaluating the dispersion stability of the obtained aqueous dispersion are shown in Table 1.

### Preparation Example 2

The same procedure as in Preparation Example 1 was repeated except adding 54.35 g of 1.0% of an aqueous sodium hydroxide solution as a base to 35 g of the fluorine-containing copolymer solution obtained in Synthesis Example 2.

### Preparation Example 3

The same procedure as in Preparation Example 1 was repeated except adding 41.87g of 1.0% of an aqueous sodium hydroxide solution as a base to 35 g of the fluorine-containing copolymer solution obtained in Synthesis Example 3.

### Preparation Example 4

The same procedure as in Preparation Example 1 was repeated except adding 48.48g of 1.0% of an aqueous sodium hydroxide solution as a base to 35 g of the fluorine-containing copolymer solution obtained in Synthesis Example 4.

### Preparation Example 5

The same procedure as in Preparation Example 1 was repeated except adding 48.48g of 1.0% of an aqueous sodium hydroxide solution as a base to 35 g of the fluorine-containing copolymer solution obtained in Synthesis Example 5.

### Preparation Example 6

The same procedure as in Preparation Example 1 was repeated except adding 41.87g of 1.0% of an aqueous sodium hydroxide solution as a base to 35 g of the fluorine-containing copolymer solution obtained in Synthesis Example 6.

### Preparation Example 7

The same procedure as in Preparation Example 1 was repeated except adding 57.36g of 2.1% of an aqueous sodium hydroxide solution as a base to 35 g of the fluorine-containing copolymer solution obtained in Synthesis Example 7.

### Comparative Preparation Example 1

The same procedure as in Preparation Example 1 was repeated except adding 48.48g of ion exchanged water to 35 g of the polymer solution obtained in Comparative Synthesis Example 1.

### Comparative Preparation Example 2

The same procedure as in Preparation Example 1 was repeated except adding 48.48g of 1.0% of an aqueous sodium hydroxide solution as a base to 35 g of the fluorine-containing copolymer solution obtained in Comparative Synthesis Example 2.

### Comparative Preparation Example 3

The same procedure as in Preparation Example 1 was repeated except adding 48.48g of 1.0% of an aqueous sodium hydroxide solution as a base to 35 g of the fluorine-containing copolymer solution obtained in Comparative Synthesis Example 3.

### Example 1

The aqueous dispersion obtained by Preparation Example 1 was diluted with ion exchanged water to give a solid content of 3 % by weight. The treatment liquid was applied to a surface of a polished porous base material (1 g of the treatment liquid, per area of 5 cm x 10 cm), and an excess of the treatment liquid was wiped off after leaving in 10 minutes at room temperature. The soil resistance test (water repellency and oil repellency) was conducted after further leaving at room temperature for 24 hours.

Limestone (Moka Cream, water-polished) and granite (China White, jet burner-treated) were used as the porous base material.

The results are shown in Table 1.

### Examples 2 to 7

The same procedure as in Example 1 was repeated except using the aqueous dispersions obtained by Preparation Examples 2 to 7. It is not know whether example 7 is within the scope of the invention because the molecular weight of the polymer of this example has not been measured.

### Comparative Example 1

The aqueous dispersion obtained by Comparative Preparation Example 1 was used.

### Comparative Example 2

The aqueous dispersion obtained by Comparative Preparation Example 2 was used.

### Comparative Example 3

The same procedure as in Example 1 was repeated except using the aqueous dispersion obtained by Comparative Preparation Example 3.

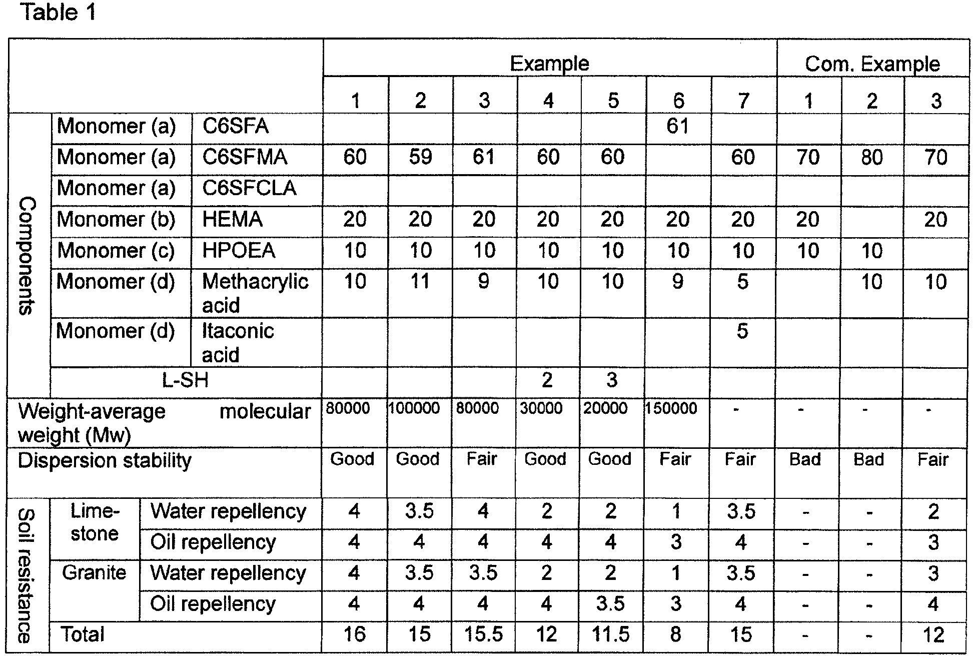

### INDUSTRIAL APPLICABILITY

The masonry treatment composition of the present invention can treat various masonries by a simple spreading operation, without causing the problem of a volatile organic compound (VOC).

## Claims

1. A masonry treatment composition comprising a fluorine-containing polymer comprising repeating units derived from:
(a) a fluorine-containing monomer having a fluoroalkyl group represented by the general formula:
CH₂=C(-X)-C(=O)-Y-Z-Rf
wherein
X is H, linear or branched C₁₋₂₁-alkyl, F, Cl, Br, I, -CFX¹X² (wherein X¹ and X² are H, F, Cl, Br or I), cyano, linear or branched C₁₋₂₁-fluoroalkyl, optionally substituted benzyl, or optionally substituted phenyl;
Y is -O- or -NH-;
Z is a C1₋10-aliphatic group, a C₆₋₁₀-aromatic or-cycloaliphatic group, -CH₂CH₂N(R¹) SO₂- wherein R¹ is C₁₋₄-alkyl, -CH₂CH(OZ¹)CH₂- wherein Z¹ is H or acetyl, or -(CH₂)*ₘ*-SO₂-(CH₂)*ₙ*- or -(CH₂)*ₘ*-S-(CH₂)*ₙ*-wherein *m* is 1-10 and *n* is 0-10, and
Rf is a linear or branched C₁₋₆-perfluoroalkyl,
(b) a first hydrophilic monomer of the formula:
CH₂=CX¹¹C(=O) -O-RO-X¹²
wherein X¹¹ is H or methyl, X¹² is H or a saturated or unsaturated C₁₋₂₂-hydrocarbon group, and R is C₂-₆-alkylene,
(c) a second hydrophilic monomer of the formula:
CH₂₌CX²¹C(=O)-O-(RO)*ₙ*-X²²
or
CH₂=CX³¹C(=O)-O-(RO)*ₙ-*C(=O) CX³²=CH₂
wherein X²¹, X³¹ and X³² each independently is H or methyl, X²² is H or a saturated or unsaturated C₁₋₂₂-hydrocarbon group,R is C₂₋₆-alkylene, and n is an integer of 2-90, and
(d) a monomer having an anion-donating group and an ethylenically unsaturated double bond which is (meth)acrylic acid,
wherein the fluorine-containing polymer comprises 45-76 wt.-% of monomer (a), 5-25 wt.-% of monomer (b), 3-30 wt.-% of monomer (c) and 6-25 wt.-% of monomer (d), based on 100 wt.-% of the total of monomers (a)-(d), and has a weight-average molecular weight of 30,000 to 110,000, as measured by GPC in terms of polystyrene.

2. The composition of claim 1, wherein X in the monomer (a) is methyl.

3. The composition of claim 1 or 2, wherein R in the monomer (c) is C₂-alkylene.

4. The composition of any of claims 1-3, wherein the weight ratio of monomer (b) and monomer (c) is 8:2 to 5:5.

5. The composition of any of claims 1-4, which is an aqueous solution of the fluorine-containing polymer.

6. The composition of any of claims 1-5 containing, based on the composition, 0.1-50 wt.-% of the fluorine-containing polymer.

7. A method of treating masonry with the composition of any of claims 1-6.

8. Masonry treated with the composition of any of claims 1-6.

## Patentansprüche

1. Zusammensetzung zur Behandlung von Mauerwerk, umfassend ein fluorhaltiges Polymer, das sich wiederholende Einheiten umfasst, die abgeleitet sind von:
(a) einem fluorhaltigen Monomer mit einer Fluoralkylgruppe, das durch die allgemeine Formel dargestellt ist:
CH₂=C(-X)-C(=O)-Y-Z-Rf
worin
X H, lineares oder verzweigtes C₁₋₂₁-Alkyl, F, Cl, Br, I, -CFX¹X² (worin X¹ und X² H, F, Cl, Br oder I sind), Cyano, lineares oder verzweigtes C₁₋₂₁-Fluoralkyl, gegebenenfalls substituiertes Benzyl oder gegebenenfalls substituiertes Phenyl ist;
Y -O- oder -NH- ist;
Z eine C₁₋₁₀-aliphatische Gruppe, eine C₆₋₁₀-aromatische oder -cycloaliphatische Gruppe,-CH₂CH₂N(R¹)SO₂-, worin R¹ C₁₋₄-Alkyl ist,-CH₂CH(OZ¹)CH₂-, worin Z¹ H oder Acetyl ist oder - (CH₂)*ₘ*-SO₂-(CH₂)*ₙ*- oder - (CH₂)*ₘ*-S-(CH₂)*ₙ*- ist, worin *m* 1-10 ist und *n* 0-10 ist, und
Rf ein lineares oder verzweigtes C₁₋₆-Perfluoralkyl ist,
(b) einem ersten hydrophilen Monomer der Formel:
CH₂₌CX¹¹C(=O)-O-RO-X¹²
worin X¹¹ H oder Methyl ist, X¹² H oder eine gesättigte oder ungesättigte C₁₋₂₂-Kohlenwasserstoffgruppe ist und R C₂₋₆-Alkylen ist,
(c) einem zweiten hydrophilen Monomer der Formel:
CH₂₌CX²¹C(=O)-O-(RO)*ₙ*-X*²²* oder
CH₂=CX³¹C(=O)-O-(RO)*ₙ₋*C(=O) CX³²=CH₂
worin X²¹, X³¹ und X³² jeweils unabhängig H oder Methyl ist, X²² H oder eine gesättigte oder ungesättigte C₁₋₂₂-Kohlenwasserstoffgruppe ist, R C₂₋₆-Alkylen ist und *n* eine Zahl von 2-90 ist, und
(d) einem Monomer mit einer Anion-abgebenden Gruppe und einer ethylenisch ungesättigten Doppelbindung, das (Meth)acrylsäure ist,
worin das fluorhaltige Polymer, bezogen auf 100 Gew.-% der gesamten Monomere (a)-(d), 45-76 Gew.-% von Monomer (a), 5-25 Gew.-% von Monomer (b), 3-30 Gew.-% von Monomer (c) und 6-25 Gew.-% von Monomer (d) umfasst, und ein mittels GPC in Bezug auf Polystyrol gemessenes gewichtsmittleres Molekulargewicht von 30.000 bis 110.000 aufweist.

2. Zusammensetzung gemäß Anspruch 1, worin X in Monomer (a) Methyl ist.

3. Zusammensetzung gemäß Anspruch 1 oder 2, worin R in Monomer (c) C₂-Alkylen ist.

4. Zusammensetzung gemäß mindestens einem der Ansprüche 1-3, worin das Gewichtsverhältnis von Monomer (b) und Monomer (c) 8:2 bis 5:5 beträgt.

5. Zusammensetzung gemäß mindestens einem der Ansprüche 1-4, die eine wässrige Lösung des fluorhaltigen Polymers ist.

6. Zusammensetzung gemäß mindestens einem der Ansprüche 1-5, die basierend auf der Zusammensetzung 0,1-50 Gew.-% des fluorhaltigen Polymers enthält.

7. Verfahren zur Behandlung von Mauerwerk mit der Zusammensetzung gemäß mindestens einem der Ansprüche 1-6.

8. Mauerwerk, behandelt mit der Zusammensetzung gemäß mindestens einem der Ansprüche 1-6.

## Revendications

1. Composition de traitement de maçonneries comprenant un polymère contenant du fluor comprenant des unités de répétition dérivées de :
(a) un monomère contenant du fluor ayant un groupe fluoroalkyle représenté par la formule générale :
CH₂=C(-X)-C(=O)-Y-Z-Rf
dans laquelle
X est H, un alkyle en C₁₋₂₁ ramifié ou linéaire, F, Cl. Br, I, -CFX¹X² (dans laquelle X¹ et X² sont H, F, Cl, Br ou I), cyano, un fluoroalkyle en C₁₋₂₁ ramifié ou linéaire, un benzyle optionnellement substitué, ou un phényle optionnellement substitué;
Y est -O- ou -NH-;
Z est un groupe aliphatique en C₁₋₁₀, un groupe cycloaliphatique ou aromatique en C₆₋₁₀, -CH₂CH₂N(R₁)SO₂- dans laquelle R¹ est un alkyle en C₁₋₄, -CH²CH(OZ¹)CH₂-dans laquelle Z¹ est H ou acétyle, ou -(CH₂)ₘ-SO₂-(CH₂)ₙ- ou -(CH₂)ₘ-S-(CH₂)ₙ- dans laquelle m est 1-10 et n est 0-10, et
Rf est un perfluoroalkyle en C₁₋₆ ramifié ou linéaire,
(b) un premier monomère hydrophilique de la formule :
CH₂=CX¹¹(=O)-O-RO-X¹²
dans laquelle X¹¹ est H ou méthyle, X¹² est H ou un groupe hydrocarbone en C₁₋₂₂ insaturé ou saturé, et R est un alkylène en C₂₋₆,
(c) un deuxième monomère hydrophilique de la formule :
CH₂=CX²¹C(=O)-O-(RO)*ₙ*-X²² or
CH₂=CX³¹C(=O)-O-(RO)*ₙ*-C(=O)CX³²=CH₂
dans laquelle X²¹, X³¹ et X³² sont chacun indépendamment H ou méthyle, X²² est H ou un groupe hydrocarboné en C₁₋₂₂ insaturé ou saturé, R est un alkylène en C₂₋₆, et n est un entier de 2-90, et
(d) un monomère ayant un groupe donneur d'anion et une liaison double éthyléniquement insaturée qui est l'acide (méth)acrylique,
dans laquelle le polymère contenant du fluor comprend 45-76 % en poids de monomère (a), 5-25 % en poids de monomère (b), 3-30 % en poids de monomère (c) et 6-25 % en poids de monomère (d), sur la base de 100 % en poids du total des monomères (a)-(d), et
a un poids moyen moléculaire en poids de 30000 à 110000, tel que mesuré par chromatographie à perméation de gel (GPC) en termes de polystyrène.

2. La composition de la revendication 1, dans laquelle X dans le monomère (a) est méthyle.

3. La composition de la revendication 1 ou 2, dans laquelle R dans le monomère (c) est un alkylène en C₂.

4. La composition de l'une quelconque des revendications 1-3, dans laquelle le rapport en poids de monomère (b) et de monomère (c) est de 8:2 à 5:5.

5. La composition de l'une quelconque des revendications 1-4, qui est une solution aqueuse du polymère contenant du fluor.

6. La composition de l'une quelconque des revendications 1-5 contenant, sur la base de la composition, 0,1-50 % en poids du polymère contenant du fluor.

7. Procédé de traitement de maçonneries avec la composition de l'une quelconque des revendications 1-6.

8. Maçonneries traitée avec la composition de l'une quelconque des revendications 1-6.
